# EUROPEAN PATENT APPLICATION

(11) **EP 4 748 612 A1**
(43) Date of publication of application: **27.05.2026**
(21) Application number: 25212388.0
(22) Date of filing: 30.10.2025
(51) Int. Cl.: B60K 35/81, B60L 50/50

(54) **CONTROLLER**

(30) Priority: 25.11.2024 JP 2024204602
(71) Applicant: TOYOTA JIDOSHA KABUSHIKI KAISHA, Toyota-shi, Aichi-ken 471-8571 (JP)
(72) Inventor: OGAWA, Takahiro, Toyota-shi, 471-8571 (JP); TAGUCHI, Ryuji, Toyota-shi, 471-8571 (JP); KITAMOTO, Yuma, Toyota-shi, 471-8571 (JP)
(74) Representative: J A Kemp LLP

(57) **Abstract**

A controller is configured to control a vehicle that includes a battery configured to store electrical energy for driving a drive motor, a touch display configured to display an image and receive a touch operation, and a display configured to display an image. The controller includes a storage device and an execution device. The storage device is configured to store charging-time content. The charging-time content includes a charging-state image that is to be displayed on the display during charging of the battery. The execution device is configured to cause the display to display the charging-time content when the battery is not being charged and a predetermined operation has been performed on the touch display.

## Description

### BACKGROUND

### 1. Field

The present disclosure relates to a controller.

### 2. Description of Related Art

JP2024-509999A discloses a multimedia content display apparatus. When a display mode is selected, the multimedia content display apparatus causes content corresponding to the display mode to be displayed.

The multimedia content display apparatus disclosed in the above publication may function as a controller that controls a vehicle including a battery and a display. The battery stores electrical energy for driving a drive motor serving as a drive source for the vehicle. In such a case, unless the battery is charged, the control device cannot provide charging-time content, which is displayed during charging of the battery, to a user of the vehicle.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A controller according to an aspect of the present disclosure is configured to control a vehicle that includes a battery configured to store electrical energy for driving a drive motor, a touch display configured to display an image and receive a touch operation, and a display configured to display an image. The controller includes a storage device and an execution device. The storage device is configured to store charging-time content. The charging-time content includes a charging-state image that is to be displayed on the display during charging of the battery. The execution device is configured to cause the display to display the charging-time content when the battery is not being charged and a predetermined operation has been performed on the touch display.

Other features and aspects will be apparent from the following detailed description, the drawings, and the claims.

### BRIEF DESCRIPTION OF THE DRAWINGS

Fig. 1 is a schematic diagram illustrating a vehicle according to an embodiment.
Fig. 2 is a flowchart illustrating the first half of a series of processes in an exhibit mode executed by the execution device shown in Fig. 1.
Fig. 3 is a flowchart illustrating the second half of the series of processes in the exhibit mode executed by the execution device of Fig. 1.
Fig. 4 is a schematic diagram illustrating a state in which a closed-state image is displayed on the touch display shown in Fig. 1.
Fig. 5 is a diagram illustrating an open state of the cover shown in Fig. 1.
Fig. 6 is a schematic diagram illustrating a state in which a non-insertion-state image is displayed on the touch display shown in Fig. 1.
Fig. 7 is a schematic diagram illustrating a state in which an insertion-state image is displayed on the touch display shown in Fig. 1.
Fig. 8 is a schematic diagram illustrating a state in which a charging-state image is displayed on the display shown in Fig. 1.
Fig. 9 is a schematic diagram illustrating a state in which a state-of-charge image is changed in the charging-state image displayed on the display shown in Fig. 1.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### Embodiment

A controller according to an embodiment will now be described with reference to the drawings.

### Overview of Vehicle

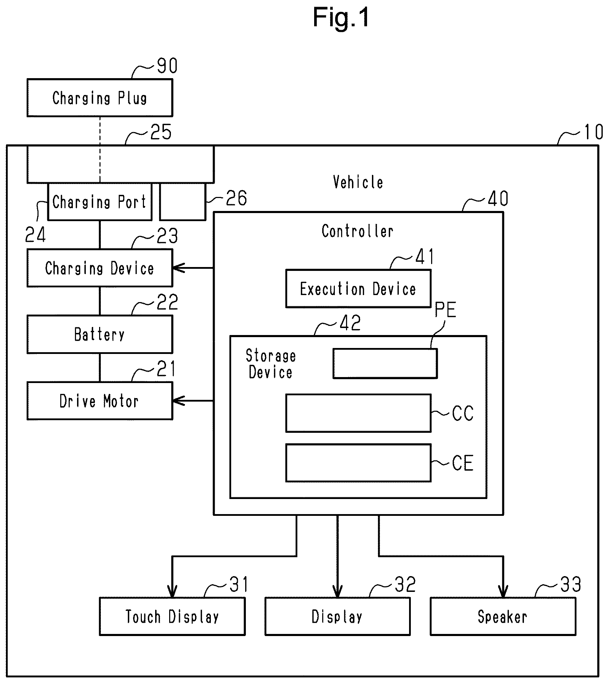

As shown in Fig. 1, a vehicle 10 includes a drive motor 21, a battery 22, a charging device 23, a charging port 24, a cover 25, and an illumination device 26. The vehicle 10 is a battery electric vehicle.

The drive motor 21 is a driving source for the vehicle 10. The drive motor 21 drives the vehicle 10 by using electrical energy stored in the battery 22. The vehicle 10 is accelerated and decelerated by controlling the drive motor 21. The battery 22 stores electrical energy for driving the drive motor 21.

The charging device 23 includes a relay that switches connection and disconnection of an electrical energy path from the charging port 24 to the battery 22, and an electrical energy conversion circuit. The battery 22 is charged by controlling the charging device 23.

The charging port 24 is a port into which a charging plug 90, used to charge the battery 22, from an electrical energy source located outside the vehicle 10 is inserted. In the state in which the charging plug 90 is connected to the charging port 24, the battery 22 can be charged from the electrical energy source outside the vehicle 10.

The cover 25 is part of the body of the vehicle 10. The cover 25 is opened or closed by an actuator (not shown). In the closed state, the cover 25 covers the charging port 24 and the illumination device 26. In the open state, the cover 25 exposes the charging port 24 and the illumination device 26 to the outside of the vehicle 10. Thus, in the open state, the cover 25 does not prevent the charging plug 90 from being inserted into the charging port 24. That is, the open state allows insertion of the charging plug 90 into the charging port 24. In the open state, the illumination device 26 is visible from the outside of the vehicle 10.

The illumination device 26 is illuminated to indicate that charging from the charging plug 90 to the battery 22 via the charging port 24 is being performed. The illumination device 26 includes a full-color LED.

The full-color LED of the illumination device 26 is illuminated in accordance with the charging state of the battery 22. For example, when charging is started, the illumination device 26 is illuminated in green. After a predetermined time has elapsed since charging started, and while charging is being normally performed, the illumination device 26 blinks green. In the present embodiment, the speed at which the illumination device 26 blinks changes in accordance with the state of charge of the battery 22. Specifically, as the state of charge of the battery 22 increases, the blinking speed decreases.

When a single charging plan using the charging plug 90 is completed, the illumination device 26 is illuminated in blue. When charging is stopped due to an erroneous operation, the illumination device 26 is illuminated in yellow. When an abnormality related to charging is detected, the illumination device 26 is illuminated in red.

The vehicle 10 includes a touch display 31, a display 32, and a speaker 33. The touch display 31 displays an image, and receives a touch operation based on contact of, for example, a user's finger. The touch display 31 is positioned so as to be visible to the driver of the vehicle 10. The touch display 31 is, for example, a center display located relatively near a center console of the vehicle 10.

The display 32 displays an image. The display 32 is positioned so as to be visible to the driver of the vehicle 10. The display 32 is, for example, a meter display disposed between a steering wheel and a windshield of the vehicle 10. The speaker 33 outputs sound into an interior of the vehicle 10.

### Controller

The vehicle 10 includes a controller 40. The controller 40 controls the vehicle 10. Specifically, the controller 40 controls at least charging of the battery 22 and output of multimedia in the vehicle 10. The controller 40 includes an execution device 41, which is a CPU, and a storage device 42, which is a memory.

The storage device 42 stores various programs to be executed by the execution device 41. The execution device 41 controls charging of the battery 22 and output of multimedia in the vehicle 10 by executing the programs.

Regarding the charging of the battery 22 in the vehicle 10, when the controller 40 detects that the charging plug 90 is connected to the charging port 24, the controller 40 controls the charging device 23 to charge the battery 22 with reference to the state of charge of the battery 22. The controller 40 controls the output of the illumination device 26 and the output to the display 32 in response to the charging of the battery 22. Specifically, the storage device 42 stores a charging-time content CC including a charging-state image IM4 that is to be displayed on the display 32 during charging of the battery 22. The execution device 41 outputs the charging-time content CC to the display 32 during charging of the battery 22. The charging-time content CC including the charging-state image IM4 will be described later. The execution device 41 turns on the illumination device 26 in accordance with the charging of the battery 22.

### Control in Exhibit Mode

The storage device 42 stores an exhibit program PE for providing experience related to charging of the battery 22 in an exhibit mode of the vehicle 10. The storage device 42 stores exhibit content CE for providing experience of charging. The exhibit content CE is displayed on the touch display 31 when the exhibit program PE is executed. The exhibit content CE includes a closed-state image IM1, a non-insertion-state image IM2, and an insertion-state image IM3, all of which will be described later.

In the vehicle 10, when an operation of requesting experience related to charging of the battery 22 in the exhibit mode of the vehicle 10 is performed, the execution device 41 starts execution of the exhibit program PE on condition that the vehicle 10 is not traveling and the battery 22 is not being charged.

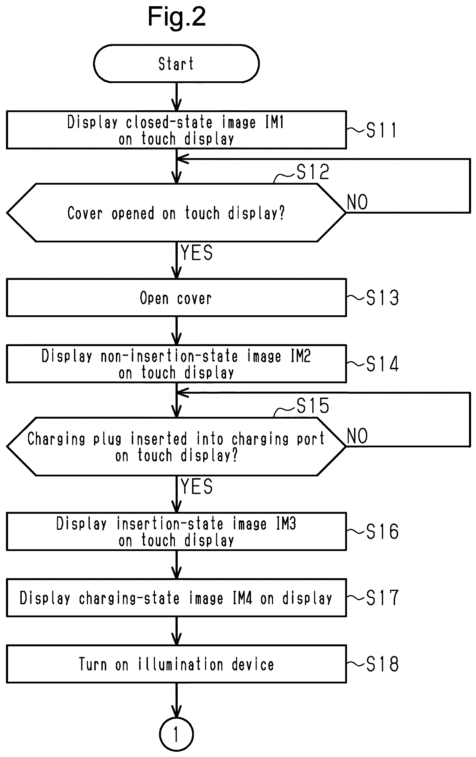

As shown in Fig. 2, when starting execution of the exhibit program PE, the execution device 41 first performs the process of step S11. In step S11, the execution device 41 displays the closed-state image IM1 on the touch display 31.

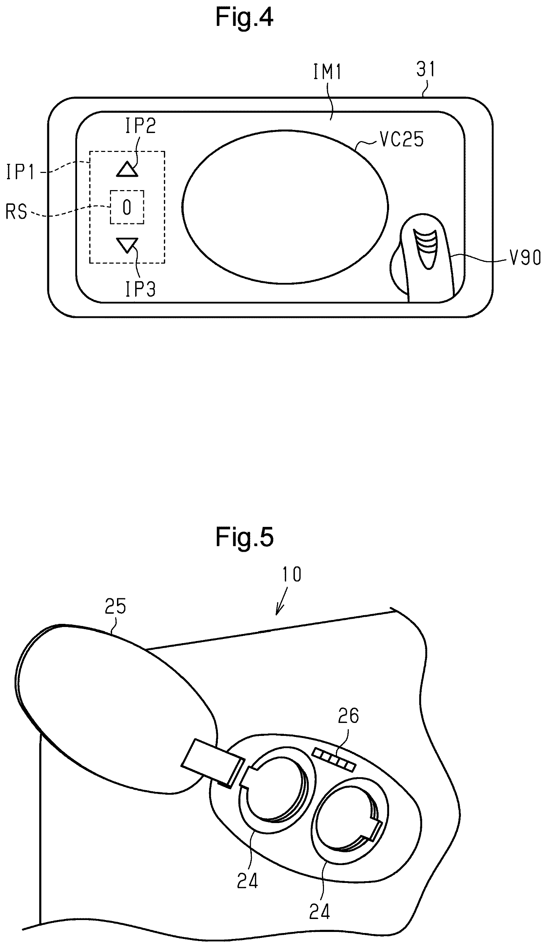

As shown in Fig. 4, the closed-state image IM1 includes a closed cover image VC25, which indicates the cover 25, and a plug image V90, which indicates the charging plug 90. The closed-state image IM1 indicates that the cover 25 is closed. The closed-state image IM1 includes a partial image IP1 in which a set state of charge RS of the battery 22 is changeable. The set state of charge RS is set as a virtual state of charge of the battery 22. In the present embodiment, the partial image IP1 includes an increase icon IP2, which indicates a button for increasing the set state of charge RS by a certain amount, and a decrease icon IP3, which indicates a button for decreasing the set state of charge RS by a certain amount.

As shown in Fig. 2, after displaying the closed-state image IM1 on the touch display 31 in step S11, the execution device 41 advances the process to step S12. In step S12, the execution device 41 determines whether an operation of opening the cover 25 has been performed on the touch display 31.

Specifically, when a touch operation has been performed on the closed cover image VC25, which indicates the cover 25 in the closed-state image IM1, the execution device 41 determines that an operation of opening the cover 25 has been performed on the touch display 31.

When the operation of opening the cover 25 has not been performed on the touch display 31 (S12: NO), the execution device 41 repeats the process of step S12. When the operation of opening the cover 25 has been performed on the touch display 31 (S12: YES), the execution device 41 advances the process to step S13.

In step S13, the execution device 41 physically opens the cover 25.

As shown in Fig. 5, when the execution device 41 opens the cover 25, the controller 40 allows the charging plug 90 to be inserted into the charging port 24 and allows the illumination device 26 to be visible. In the present embodiment, the charging port 24 includes two ports, one for normal charging and the other for fast charging.

As shown in Fig. 2, after opening the cover 25 in step S13, the execution device 41 advances the process to step S14. In step S14, the execution device 41 displays the non-insertion-state image IM2 on the touch display 31.

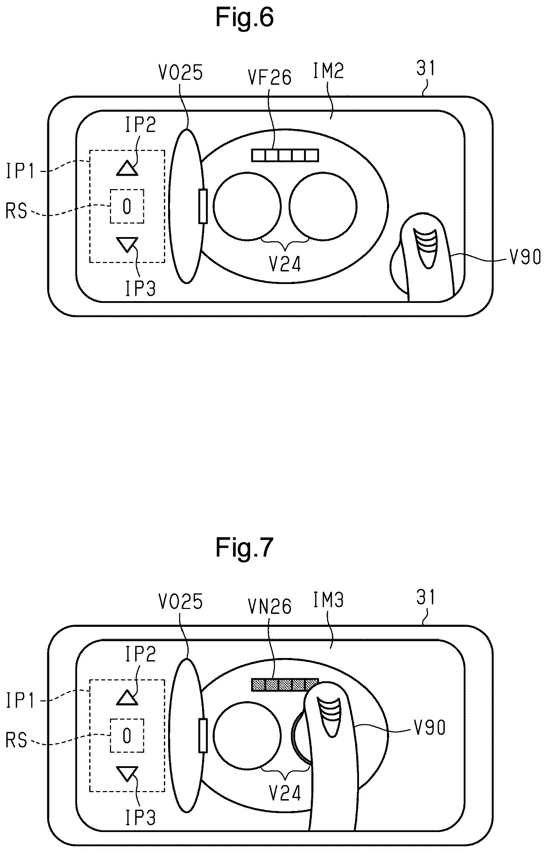

As shown in Fig. 6, the non-insertion-state image IM2 includes an open cover image VO25, which indicates the cover 25 in the open state, a plug image V90, and a port image V24, which indicates the charging port 24. The non-insertion-state image IM2 indicates a state in which the charging plug 90 is not inserted into the charging port 24. The non-insertion-state image IM2 is an open-state image indicating a state in which the cover 25 is open.

The non-insertion-state image IM2 includes a non-illuminated-state image VF26, which indicates the illumination device 26 in a non-illuminated state. The non-insertion-state image IM2 includes a partial image IP1 in the same manner as the closed-state image IM1.

As shown in Fig. 2, after displaying the non-insertion-state image IM2 on the touch display 31 in step S14, the execution device 41 advances the process to step S15. In step S15, the execution device 41 determines whether a predetermined operation has been performed on the touch display 31. In the present embodiment, the predetermined operation refers to an operation of inserting the charging plug 90 into the charging port 24 on the touch display 31 in a state in which the non-insertion-state image IM2 is displayed on the touch display 31. That is, in step S15, the execution device 41 determines whether the operation of inserting the charging plug 90 into the charging port 24 has been performed on the touch display 31. The non-insertion-state image IM2 includes an image necessary for performing the predetermined operation.

The operation of inserting the charging plug 90 into the charging port 24 on the touch display 31 is to, for example, touch the plug image V90 and then slide the plug image V90 to the port image V24, which indicates the charging port 24, on the touch display 31.

When the operation of inserting the charging plug 90 into the charging port 24 has not been performed on the touch display 31 (S15: NO), the execution device 41 repeats the process of step S15. When the operation of inserting the charging plug 90 into the charging port 24 has been performed on the touch display 31 (S15: YES), the execution device 41 advances the process to step S16.

In step S16, the execution device 41 causes the touch display 31 to display the insertion-state image IM3.

As shown in Fig. 7, the insertion-state image IM3 includes the open cover image VO25, which indicates the cover 25 in the open state, the plug image V90, and the port image V24, which indicates the charging port 24. The insertion-state image IM3 indicates a state in which the charging plug 90 is inserted into the charging port 24. The insertion-state image IM3 is an open-state image indicating a state in which the cover 25 is open.

The insertion-state image IM3 includes an illuminated-state image VN26, which indicates the illumination device 26 in an illuminated state. The insertion-state image IM3 includes a partial image IP1 which indicates the set state of charge RS of the battery 22 and in which the set state of charge RS is changeable.

As shown in Fig. 2, after displaying the insertion-state image IM3 on the touch display 31 in step S16, the execution device 41 advances the process to step S17. In step S17, the execution device 41 causes the display 32 to display the charging-state image IM4.

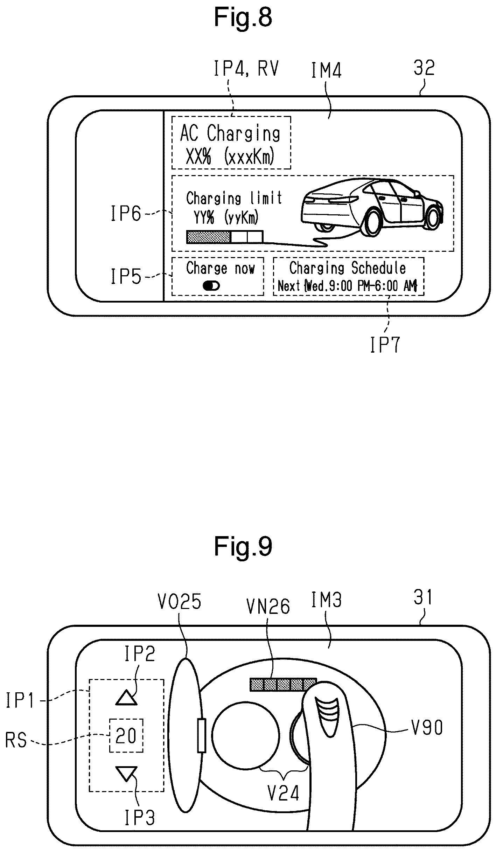

As shown in Fig. 8, the execution device 41 displays the charging-time content CC including the charging-state image IM4 in the exhibit mode. The charging-state image IM4 indicates that the battery 22 in the vehicle 10 is being charged. The charging-state image IM4 includes a state-of-charge image IP4, which indicates the state of charge, a partial image IP5, which indicates whether charging is being performed, a partial image IP6, which indicates a set charging limit value, and a partial image IP7, which indicates a charging schedule.

In the exhibit mode, the state-of-charge image IP4 indicates a virtual state of charge RV as the state of charge. The value of the virtual state of charge RV matches the value of the set state of charge RS. In the exhibit mode, the partial image IP6 indicates a virtual charging limit value as the charging limit value. In the exhibit mode, the partial image IP7 indicates a virtual charging schedule as the charging schedule.

Specifically, when the battery 22 is not being charged and the operation of inserting the charging plug 90 into the charging port 24 has been performed on the touch display 31, the execution device 41 displays the charging-time content CC on the display 32.

As shown in Fig. 2, after displaying the charging-state image IM4 on the display 32 in step S17, the execution device 41 advances the process to step S18. In step S18, the execution device 41 physically turns on the illumination device 26 in green.

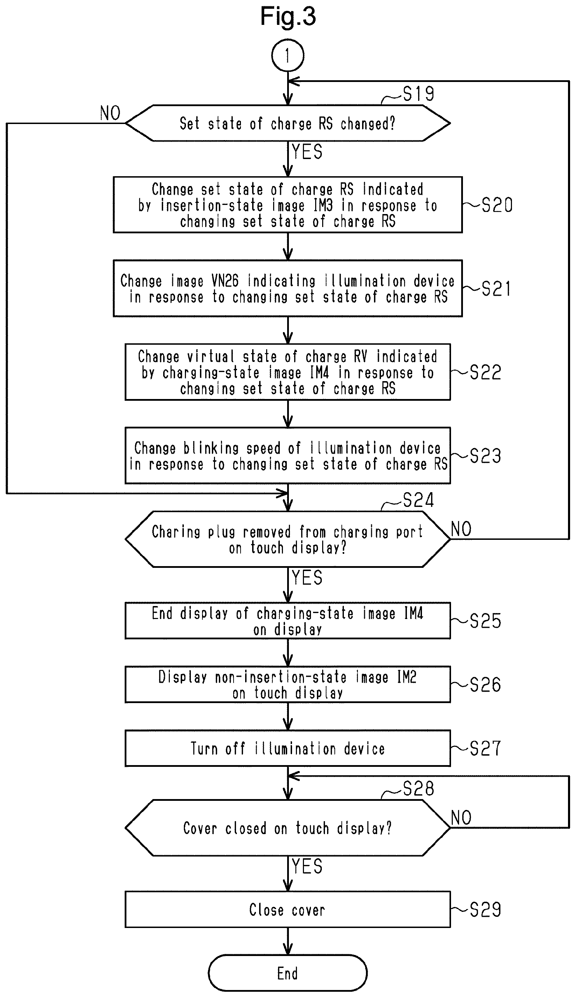

As shown in Fig. 3, after turning on the illumination device 26 in green in step S18, the execution device 41 advances the process to step S19. In step S19, the execution device 41 determines whether an operation of changing the set state of charge RS has been performed on the touch display 31.

Specifically, when the partial image IP1, in which the set state of charge RS is changeable, has been touched in a state in which the insertion-state image IM3 is displayed, the execution device 41 determines that the operation of changing the set state of charge RS has been performed on the touch display 31.

When an operation of touching the increase icon IP2 has been performed, the execution device 41 determines that an operation of increasing the set state of charge RS has been performed. When an operation of touching the decrease icon IP3 has been performed, the execution device 41 determines that an operation of decreasing the set state of charge RS has been performed.

When the operation of changing the set state of charge RS has not been performed on the touch display 31 (S19: NO), the execution device 41 advances the process to step S24, which will be described later. When the operation of changing the set state of charge RS has been performed on the touch display 31 (S19: YES), the execution device 41 advances the process to step S20.

In step S20, the execution device 41 changes the set state of charge RS of the insertion-state image IM3, which is displayed on the touch display 31, in response to the operation of changing the set state of charge RS.

As shown in Fig. 9, for example, when the determining that the operation of increasing the set state of charge RS has been performed, the execution device 41 changes the value of the set state of charge RS from 0 to 20 in the insertion-state image IM3, which is displayed on the touch display 31.

As shown in Fig. 3, after changing the set state of charge RS of the insertion-state image IM3 in step S20, the execution device 41 advances the process to step S21. In step S21, the execution device 41 changes the illuminated-state image VN26, which indicates the illumination device 26 in the illuminated state, in the insertion-state image IM3, which is displayed on the touch display 31, in response to the operation of changing the set state of charge RS.

Specifically, when the operation of increasing the set state of charge RS has been performed, the execution device 41 changes the illuminated-state image VN26 so as to increase the speed at which the illuminated-state image VN26, which indicates the illumination device 26, blinks. When the operation of decreasing the set state of charge RS has been performed, the execution device 41 changes the illuminated-state image VN26 so as to decrease the speed at which the illuminated-state image VN26, which indicates the illumination device 26, blinks. Then, the execution device 41 advances the process to step S22.

In step S22, the execution device 41 changes the virtual state of charge RV, which is indicated by the state-of-charge image IP4 of the charging-state image IM4 displayed on the display 32, in response to the operation of changing the set state of charge RS. Then, the execution device 41 advances the process to step S23.

In step S23, the execution device 41 physically controls the illumination of the illumination device 26 in response to the operation of changing the set state of charge RS. In the present embodiment, the execution device 41 changes the blinking speed of the illumination device 26 in response to the operation of changing the set state of charge RS. Specifically, when the operation of increasing the set state of charge RS is performed, the execution device 41 increases the blinking speed of the illumination device 26. When the operation of decreasing the set state of charge RS is performed, the execution device 41 decreases the blinking speed of the illumination device 26. Then, the execution device 41 advances the process to step S24.

In step S24, the execution device 41 determines whether an operation of removing the charging plug 90 from the charging port 24 has been performed on the touch display 31. Specifically, when a touch operation has been performed on the plug image V90 in a state in which the insertion-state image IM3 is displayed, the execution device 41 determines that the operation of removing the charging plug 90 from the charging port 24 has been performed on the touch display 31.

When the operation of removing the charging plug 90 from the charging port 24 has not been performed on the touch display 31 (S24: NO), the execution device 41 returns the process to step S19. When the operation of removing the charging plug 90 from the charging port 24 has been performed on the touch display 31 (S24: YES), the execution device 41 advances the process to step S25.

In step S25, the execution device 41 ends display of the charging-state image IM4 on the display 32. For example, the execution device 41 displays an image that is to be displayed when the battery 22 is not being charged, instead of the charging-state image IM4. Then, the execution device 41 advances the process to step S26.

In step S26, the execution device 41 causes the touch display 31 to display the non-insertion-state image IM2 instead of the insertion-state image IM3. Then, the execution device 41 advances the process to step S27.

In step S27, the execution device 41 physically turns off the illumination device 26. Then, the execution device 41 advances the process to step S28.

In step S28, the execution device 41 determines whether an operation of closing the cover 25 has been performed on the touch display 31. Specifically, when the operation of touching the open cover image VO25 indicating the cover 25 in the open state has been performed in a state in which the non-insertion-state image IM2 is displayed, the execution device 41 determines that the operation of closing the cover 25 has been performed on the touch display 31.

When the operation of closing the cover 25 has not been performed on the touch display 31 (S28: NO), the execution device 41 repeats the process of step S28. When the operation of closing the cover 25 has been performed on the touch display 31 (S28: YES), the execution device 41 advances the process to step S29. In step S29, the execution device 41 physically closes the cover 25. Thus, the execution device 41 ends the current series of processes.

### Operation of the Present Embodiment

In, for example, an exhibition hall or a dealership, even when the battery 22 is not physically charged, the controller 40 of above-described embodiment provides the user of the vehicle 10 with experience related to charging of the battery 22 in the exhibit mode.

### Advantages of the Present Embodiment

(1) In the above-described embodiment, the controller 40 causes the display 32 to display the charging-time content CC to experience the charging of the battery 22 in the exhibit mode. Specifically, when the battery 22 is not being charged and a predetermined operation has been performed on the touch display 31, the execution device 41 causes the display 32 to display the charging-time content CC.

In the above-described embodiment, when the predetermined operation has been performed on the touch display 31 (S15: YES) even if the battery 22 is not being charged, the execution device 41 causes the display 32 to display the charging-time content CC in step S17. Accordingly, when the predetermined operation has been performed even if the battery 22 is not being charged, the controller 40 allows the user of the vehicle 10 to experience viewing the charging-time content CC.

(2) The storage device 42 stores the non-insertion-state image IM2 including the plug image V90, which indicates the charging plug 90, and the port image V24, which indicates the charging port 24. The non-insertion-state image IM2 indicates a state in which the charging plug 90 is not inserted into the charging port 24. The predetermined operation refers to an operation of inserting the charging plug 90 into the charging port 24 on the touch display 31 in a state in which the non-insertion-state image IM2 is displayed on the touch display 31.

In the above-described embodiment, the user of the vehicle 10 performs the operation of inserting the charging plug 90 into the charging port 24 on the touch display 31, thereby experiencing the charging-time content CC being displayed on the display 32.

(3) When the operation of inserting the charging plug 90 into the charging port 24 has been performed on the touch display 31 (S15: YES), the execution device 41 turns on the illumination device 26 in step S18. Thus, the user of the vehicle 10 inserts the charging plug 90 into the charging port 24 on the touch display 31, thereby experiencing the illumination device 26 being illuminated.

(4) In a state in which the insertion-state image IM3 is displayed on the touch display 31, when the operation of removing the charging plug 90 from the charging port 24 has been performed on the touch display 31 (S24: YES), the execution device 41 turns off the illumination device 26 in step S27.

In the above-described embodiment, the user of the vehicle 10 performs the operation of removing the charging plug 90 from the charging port 24 on the touch display 31, thereby experiencing the illumination device 26 being illuminated.

(5) The storage device 42 stores the closed-state image IM1 including the plug image V90, which indicates the charging plug 90, and the closed cover image VC25, which indicates the cover 25 in the closed state. The closed-state image IM1 indicates that the cover 25 is in the closed state. In a state in which the closed-state image IM1 is displayed on the touch display 31, when the operation of opening the cover 25 has been performed on the touch display 31 (S12: YES), the execution device 41 opens the cover 25 in step S13. In the above-described embodiment, the user of the vehicle 10 performs the operation of opening the cover 25 on the touch display 31, thereby experiencing the cover 25 being opened.

(6) The charging-state image IM4 includes the state-of-charge image IP4, which indicates the state of charge of the battery 22. In a state in which the insertion-state image IM3 is displayed on the touch display 31, when the operation of changing the set state of charge RS has been performed on the touch display 31 (S19: YES), the execution device 41 performs the process of step S22. In step S22, the execution device 41 changes the virtual state of charge RV, which is indicated by the state-of-charge image IP4, in response to the operation of changing the set state of charge RS.

In the above-described embodiment, the user of the vehicle 10 performs the operation of changing the set state of charge RS on the touch display 31, thereby experiencing a change in the virtual state of charge RV of the charging-state image IM4.

(7) The insertion-state image IM3 indicates a state in which the charging plug 90 is inserted into the charging port 24. In a state in which the insertion-state image IM3 is displayed on the touch display 31, when the operation of removing the charging plug 90 from the charging port 24 has been performed on the display 32 (S24: YES), the execution device 41 ends display of the charging-state image IM4 on the display 32.

In the above-described embodiment, the user of the vehicle 10 performs the operation of removing the charging plug 90 from the charging port 24 on the touch display 31, thereby experiencing termination of display of the charging-time content CC.

(8) The insertion-state image IM3 includes the partial image IP1, which indicates the set state of charge RS, which is set as a virtual state of charge of the battery 22. The partial image IP1 includes the increase icon IP2 and the decrease icon IP3, each of which includes the button for changing the set state of charge RS. In a state in which the insertion-state image IM3 is displayed on the touch display 31, when the operation of changing the set state of charge RS has been performed on the touch display 31 (S19: YES), the execution device 41 performs the process of step S23. In step S23, even if the battery 22 is not being charged, the execution device 41 controls the illumination of the illumination device 26 in response to the operation of changing the set state of charge RS.

In the above-described embodiment, the user of the vehicle 10 performs the operation of changing the set state of charge RS on the touch display 31, thereby experiencing a change in the illumination of the illumination device 26 in response to that operation.

(9) The storage device 42 stores the non-insertion-state image IM2 as the open-state image indicating the state in which the cover 25 is open. In a state in which the non-insertion-state image IM2, which is an open-state image, is displayed on the touch display 31, when the operation of closing the cover 25 has been performed on the touch display 31 (S28: YES), the execution device 41 closes the cover 25. In the above-described embodiment, the user of the vehicle 10 performs the operation of closing the cover 25 on the touch display 31, thereby experiencing the cover 25 being closed.

### Modifications

The above-described embodiment may be modified as follows. The above-described embodiment and the following modifications can be combined as long as the combined modifications remain technically consistent with each other.

The charging port 24 may only include one port.

The vehicle 10 does not have to include the cover 25. In this case, the controller 40 does not have to perform the processes of steps S11 to S13 and the processes of steps S28 and S29.

The vehicle 10 does not have to include the illumination device 26. In this case, the controller 40 does not have to perform the processes of steps S18, S21, S23, and S27.

The display 32 is not limited to a meter display. The touch display 31 is not limited to a center display. For example, the display 32 may be part of the touch display 31. For example, the display 32 may be a meter display configured to receive a touch operation. That is, the display 32 may be a touch display.

When the charging-time content CC is displayed, the controller 40 may output sound from the speaker 33. The vehicle 10 does not have to include the speaker 33.

The controller 40 may include: 1) processing circuitry including one or more processors that execute various processes according to a computer program (software); 2) processing circuitry including one or more dedicated hardware circuits such as application-specific integrated circuits (ASICs) that execute at least part of various processes; or 3) processing circuitry including a combination thereof. The processor includes a CPU and a memory, such as a RAM and a ROM. The memory stores program codes or instructions configured to cause the CPU to execute the processes. The memory, or a computer-readable medium, includes any type of medium that is accessible by general-purpose computers and dedicated computers.

The charging-time content CC stored in the storage device 42 may include only the charging-state image IM4. The charging-time content CC displayed in the exhibit mode and the charging-time content CC displayed in a display mode during physical charging of the battery 22 may be different from each other in a parameter (e.g., the state of charge) as in the above-described embodiment.

The charging-time content CC may be a video including the charging-state image IM4. In a case in which the charging-time content CC is a video, the displayed image may change with the passage of time regardless of an operation on the touch display 31 after the charging-time content CC is displayed.

In a state in which the non-insertion-state image IM2 is displayed, when the operation of inserting the charging plug 90 into the charging port 24 has been performed on the touch display 31 (S15: YES), the execution device 41 does not have to turn on the illumination device 26. That is, the execution device 41 does not have to perform the process of step S18.

In a state in which the insertion-state image IM3 is displayed on the touch display 31 as the open-state image, when the operation of closing the cover 25 has been performed on the touch display 31, the execution device 41 may close the cover 25.

In a state in which the open-state image is displayed on the touch display 31, when the operation of closing the cover 25 has been performed on the touch display 31, the execution device 41 does not have to close the cover 25.

In a state in which the insertion-state image IM3 is displayed, when the operation of removing the charging plug 90 from the charging port 24 has been performed on the touch display 31 (S24: YES), the execution device 41 does not have to turn off the illumination device 26. That is, the execution device 41 does not have to perform the process of step S27. When the operation of closing the cover 25 has been performed on the touch display 31, the execution device 41 may turn off the illumination device 26. That is, when an affirmative determination is made in step S27, the execution device 41 may perform the process of step S28.

The parameter controlled by the execution device 41 to control the illumination of the illumination device 26 in response to the operation of changing the set state of charge RS is not limited to the blinking speed. For example, in a case in which the illumination device 26 changes the illumination color according to the state of charge, the execution device 41 may control the illumination color of the illumination device 26 in response to the operation of changing the set state of charge RS. For example, in a case in which the illumination device 26 changes the illumination brightness according to the state of charge, the execution device 41 may control the illumination brightness of the illumination device 26 in response to the operation of changing the set state of charge RS.

In a state in which the insertion-state image IM3 is displayed on the touch display 31, when the operation of changing the set state of charge RS has been performed on the touch display 31 (S19: YES), the execution device 41 does not have to control the illumination of the illumination device 26. That is, the execution device 41 does not have to perform the process of step S23.

In the state in which the insertion-state image IM3 is displayed, when the operation of changing the set state of charge RS has been performed on the touch display 31 (S19: YES), the execution device 41 does not have to change the illuminated-state image VN26. That is, the execution device 41 does not have to perform the process of step S21.

In a state in which the insertion-state image IM3 is displayed, when the operation of removing the charging plug 90 from the charging port 24 has been performed on the touch display 31 (S24: YES), the execution device 41 does not have to end display of the charging-time content CC. For example, when the operation of closing the cover 25 has been performed on the touch display 31 (S28: YES), the execution device 41 may end display of the charging-time content CC on the display 32. That is, when an affirmative determination is made in the process of step S28, the execution device 41 may perform the process of step S25. Alternatively, when the operation of removing the charging plug 90 from the charging port 24 has been performed on the touch display 31 (S24: YES), the execution device 41 may switch from the charging-state image IM4 to a next image that is included in the charging-time content CC. For example, the next image is a guide image for designating a next operation.

When the operation of changing the set state of charge RS has been performed on the touch display 31 (S19: YES), the execution device 41 does not have to change the virtual state of charge RV, which is indicated by the state-of-charge image IP4, in response to the operation of changing the set state of charge RS. That is, the execution device 41 does not have to perform the process of step S22.

When the operation of changing the set state of charge RS has been performed on the touch display 31 (S19: YES), the execution device 41 does not have to change the set state of charge RS, which is indicated by the insertion-state image IM3, in response to the operation of changing the set state of charge RS. That is, the execution device 41 does not have to perform the process of step S20. The insertion-state image IM3 does not have to include the partial image IP1 indicating the set state of charge RS, the increase icon IP2, and the decrease icon IP3. For example, the insertion-state image IM3 does not have to include the partial image IP1. The insertion-state image IM3 may include an image indicating a dial for performing an operation of changing the set state of charge RS, instead of the increase icon IP2 and the decrease icon IP3.

The operation of opening the cover 25 on the touch display 31 in a state in which the closed-state image IM1 is displayed is not limited to the example of the above-described embodiment. For instance, the operation of opening the cover 25 may be an operation of sliding the closed cover image VC25 on the touch display 31 while the closed cover image VC25 in the closed-state image IM1 remains touched.

In a state in which the closed-state image IM1 is displayed, when the operation of opening the cover 25 has been performed on the touch display 31 (S12: YES), the execution device 41 does not have to open the cover 25. For example, in a state in which the closed-state image IM1 is displayed, when the operation of opening the cover 25 has been performed on the touch display 31 (S12: YES), the execution device 41 may cause the display 32 to display a message requesting the user to perform an operation of opening the cover 25. Alternatively, the execution device 41 does not have to perform the process of step S13.

The predetermined operation is not limited to the example of the above-described embodiment. For example, the predetermined operation may be operating a switch displayed on the touch display 31 for starting to provide the user with experience related to charging although the battery 22 is not physically charged in the exhibit mode. That is, the predetermined operation does not have to be performed when the battery 22 is physically charged, and simply needs to be a preset operation performed on the touch display 31.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A controller (40) configured to control a vehicle (10) that includes a battery (22) configured to store electrical energy for driving a drive motor (21), a touch display (31) configured to display an image and receive a touch operation, and a display (32) configured to display an image, the controller (40) comprising:
a storage device (42); and
an execution device (41);
the storage device (42) is configured to store charging-time content (CC), the charging-time content (CC) including a charging-state image (IM4) that is to be displayed on the display (32) during charging of the battery (22), and
the execution device (41) is configured to cause the display (32) to display the charging-time content (CC) when the battery (22) is not being charged and a predetermined operation has been performed on the touch display (31).

2. The controller (40) according to claim 1, wherein
the storage device (42) is configured to store a non-insertion-state image (IM2), the non-insertion-state image (IM2) including an image (V90) that indicates a charging plug (90) used to charge the battery (22) and an image (V24) that indicates a charging port (24) into which the charging plug (90) is inserted,
the non-insertion-state image (IM2) indicates a state in which the charging plug (90) is not inserted into the charging port (24), and
the predetermined operation is an operation of inserting the charging plug (90) into the charging port (24) on the touch display (31) in a state in which the non-insertion-state image (IM2) is displayed on the touch display (31).

3. The controller (40) according to claim 1 or 2, wherein
the vehicle (10) includes an illumination device (26) configured to be illuminated during charging of the battery (22), and
the execution device (41) is configured to turn on the illumination device (26) when the battery (22) is not being charged and the predetermined operation has been performed on the touch display (31).

4. The controller (40) according to claim 3, wherein
the vehicle (10) includes a charging port (24) into which a charging plug (90) used to charge the battery (22) is inserted,
the storage device (42) is configured to store an insertion-state image (IM3), the insertion-state image (IM3) including an image (V90) that indicates the charging plug (90) and an image (V24) that indicates the charging port (24),
the insertion-state image (IM3) indicates a state in which the charging plug (90) is inserted into the charging port (24), and
the execution device (41) is configured to turn off the illumination device (26) when an operation of removing the charging plug (90) from the charging port (24) has been performed on the touch display (31) in a state in which the insertion-state image (IM3) is displayed on the touch display (31).

5. The controller (40) according to any one of claims 1 to 4, wherein the vehicle (10) includes a charging port (24) into which a charging plug (90) used to charge the battery (22) is inserted and a cover (25) that covers the charging port (24),
the storage device (42) is configured to store a closed-state image (IM1), the closed-state image (IM1) including an image (V90) that indicates the charging plug (90) and an image (VC25) that indicates the cover (25),
the closed-state image (IM1) indicates that the cover (25) is closed, and
the execution device (41) is configured to open the cover (25) when an operation of opening the cover (25) has been performed on the touch display (31) in a state in which the closed-state image (IM1) is displayed on the touch display (31).

6. The controller (40) according to any one of claims 1 to 5, wherein
the vehicle (10) includes a charging port (24) into which a charging plug (90) used to charge the battery (22) is inserted,
the charging-state image (IM4) includes a state-of-charge image (IP4), the state-of-charge image (IP4) indicating a virtual state of charge (RV) of the battery (22),
the storage device (42) is configured to store an insertion-state image (IM3), the insertion-state image (IM3) including an image (V90) that indicates the charging plug (90) and an image (V24) that indicates the charging port (24),
the insertion-state image (IM3) indicates a state in which the charging plug (90) is inserted into the charging port (24),
the insertion-state image (IM3) further includes an image (IP1) that indicates a set state of charge (RS) and an image (IP2, IP3) that indicates a button for changing the set state of charge (RS), the set state of charge (RS) being set as a virtual state of charge of the battery (22), and
the execution device (41) is configured to change the virtual state of charge (RV) indicated by the state-of-charge image (IP4) in response to an operation of changing the set state of charge (RS) when the operation of changing the set state of charge (RS) has been performed on the touch display (31) in a state in which the insertion-state image (IM3) is displayed on the touch display (31).

7. The controller (40) according to any one of claims 1 to 6, wherein
the vehicle (10) includes a charging port (24) into which a charging plug (90) used to charge the battery (22) is inserted,
the storage device (42) is configured to store an insertion-state image (IM3), the insertion-state image (IM3) including an image (V90) that indicates the charging plug (90) and an image (V24) that indicates the charging port (24),
the insertion-state image (IM3) indicates a state in which the charging plug (90) is inserted into the charging port (24), and
the execution device (41) is configured to end display of the charging-time content (CC) on the display (32) when an operation of removing the charging plug (90) from the charging port (24) has been performed on the touch display (31) in a state in which the insertion-state image (IM3) is displayed on the touch display (31).

8. The controller (40) according to any one of claims 1 to 7, wherein
the vehicle (10) includes a charging port (24) into which a charging plug (90) used to charge the battery (22) is inserted and an illumination device (26) configured to be illuminated during charging of the battery (22),
the storage device (42) is configured to store an insertion-state image (IM3), the insertion-state image (IM3) including an image (V90) that indicates the charging plug (90) and an image (V24) that indicates the charging port (24),
the insertion-state image (IM3) indicates a state in which the charging plug (90) is inserted into the charging port (24),
the insertion-state image (IM3) further includes an image (IP1) that indicates a set state of charge (RS) and an image (IP2, IP3) that indicates a button for changing the set state of charge (RS), the set state of charge (RS) being set as a virtual state of charge of the battery (22), and
the execution device (41) is configured to control, when an operation of changing the set state of charge (RS) has been performed on the touch display (31) in a state in which the insertion-state image (IM3) is displayed on the touch display (31), illumination of the illumination device (26) in response to an operation of changing the set state of charge (RS) even if the battery (22) is not being charged.

9. The controller (40) according to any one of claims 1 to 8, wherein
the vehicle (10) includes a charging port (24) into which a charging plug (90) used to charge the battery (22) is inserted and a cover (25) that covers the charging port (24),
the storage device (42) is configured to store an open-state image (IM2, IM3), the open-state image (IM2, IM3) including an image (V90) that indicates the charging plug (90), an image (V24) that indicates the charging port (24), an image (VO25) that indicates the cover (25),
the open-state image (IM2, IM3) indicates a state in which the cover (25) is open, and
the execution device (41) is configured to close the cover (25) when an operation of closing the cover (25) has been performed on the touch display (31) in a state in which the open-state image (IM2, IM3) is displayed on the touch display (31).
